# Europäisches Patentamt
# European Patent Office
# Office européen des brevets

(11) Publication number: **0 238 706**
**B1**

(12) **EUROPEAN PATENT SPECIFICATION**

(45) Date of publication of patent specification: **12.12.90**

(21) Application number: **86108374.9**

(22) Date of filing: **19.06.86**

(51) Int. Cl.⁵: **A 01 F 15/14, A 01 F 15/08**

(54) Machine for forming cylindrical bales of crop.

(30) Priority: **05.03.86 GB 8605466**

(43) Date of publication of application:
**30.09.87 Bulletin 87/40**

(45) Publication of the grant of the patent:
**12.12.90 Bulletin 90/50**

(84) Designated Contracting States:
**DE FR GB IT NL**

(56) References cited:
**EP-A-0 060 366**
**DE-A-3 330 757**
**GB-A-2 034 273**
**GB-A-2 137 927**
**US-A-4 407 113**

(73) Proprietor: **DEERE & COMPANY**
**1 John Deere Road**
**Moline, Illinois 61265 (US)**

(72) Inventor: **Frerich, Josef**
**Flurstrasse 6**
**D-6661 Dietrichingen (DE)**
Inventor: **Viaud, Jean**
**16, Rue de l'Ecole**
**F-57200 Sarreguemines (FR)**

(74) Representative: **Feldmann, Bernhard et al**
**DEERE & COMPANY European Office Patent**
**Department Steubenstrasse 36-42 Postfach**
**100862**
**D-6800 Mannheim 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a baling machine for forming cylindrical bales of crop having a baling chamber with an inlet for crop material, a bale gate formed by a rear portion of the machine, a holder for a roll of net or foil wrapping material, feed rolls for the wrapping material, a cutting mechanism for the wrapping material downstream of the feed rolls, and a wrapping material guide disposed between the cutting mechanism and the inlet so that the wrapping material passes over the guide into the chamber.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale.

There are basically two forms of such machines, namely those with a fixed volume baling chamber defined by driven fixed-position rolls and those with a baling chamber defined by runs of driven belts which move outwardly to enlarge the chamber to accommodate the bale as it grows in size. In both forms the hay is caused, by the driven movement of the rolls or belts, to roll round upon itself into a core and the core rotates about its horizontal axis and finally a completed bale is formed, the chamber being fed throughout with hay. The completed bale is tied with twine to maintain its shape and is discharged through a gate formed by a rear portion of the machine.

Various proposals have been made to employ net or foil as a wrapping material instead of twine for balers with a fixed volume baling chamber. A roll of the wrapping material is located at the front or top of the machine and the material is passed through the nip of a pair of feed rolls and then between neighbouring fixed-position baling chamber rolls into the baling chamber where it is trapped between the outer surface of the bale and the baling chamber rolls so that it is carried round with the rotating bale and hence wraps round the bale. One such proposal is described in GB—A—2 124 975, and another in GB—A—2 137 927. In the latter, a guide is provided over which the wrapping material passes to the inlet.

However, in the case of balers with a variable volume baling chamber it is not possible to feed the net or foil between the belts forming the chamber, and the present invention enables bales produced in such a chamber to be wrapped with these materials.

US—A—4 407 113 discloses a belt-type baler having a baling chamber whose volume is variable wherein the wrapping maerial is fed from the front to the inlet for crop. The wrapping material is entrained with the crop being fed to the baling chamber. This results in crop being sandwiched betwen two layers of wrapping material.

According to the present invention the baling chamber is a variable volume chamber defined by belts, the holder is disposed on the back of the gate, and the guide is disposed so that the wrapping material passes between the guide and the underside of the belts through the inlet.

Preferably the guide is sufficiently close to the underside of the belts that wrapping material on it will be gripped between it and the belts and advanced by the belts to the inlet.

An embodiment of the invention will now be described with reference to the accompanying diagrammatic drawings in which:

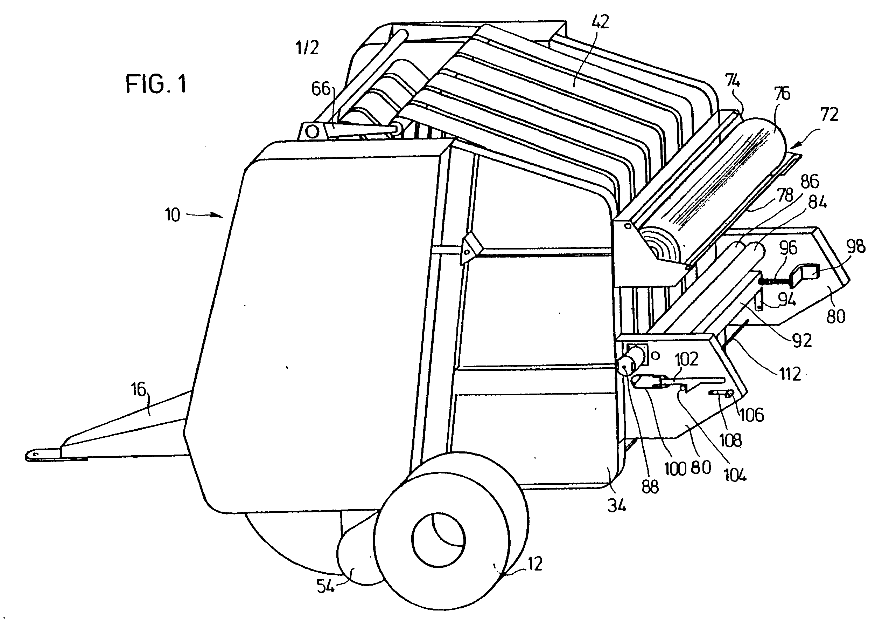

Fig. 1 is a perspective view of the left hand side and rear of a machine of the present invention for forming large cylindrical bales of hay with some items omitted and

Fig. 2 is a view of the machine from the left showing details within the machine.

In the drawings, the baler includes a main frame 10 mounted on a pair of wheels 12. The main frame has an upright fore-and-aft extending wall 14 on either side connected by transverse beams (not shown). A draft tongue 16 is connected to a transverse beam at the front of the frame 10 and extends forwardly for attaching the baler to a tractor (also not shown) which draws the machine.

A plurality of lateral rolls extends over the width of the machine. One set of rolls 18, 20, 22, 24, 26 is journalled in the side walls 14, whilst another set consisting of rolls 28, 30, 32 is journalled in a swingable gate 34. There is also a pair of chamber restricting rolls 36, 38 and two belt take-up rolls 40, 41.

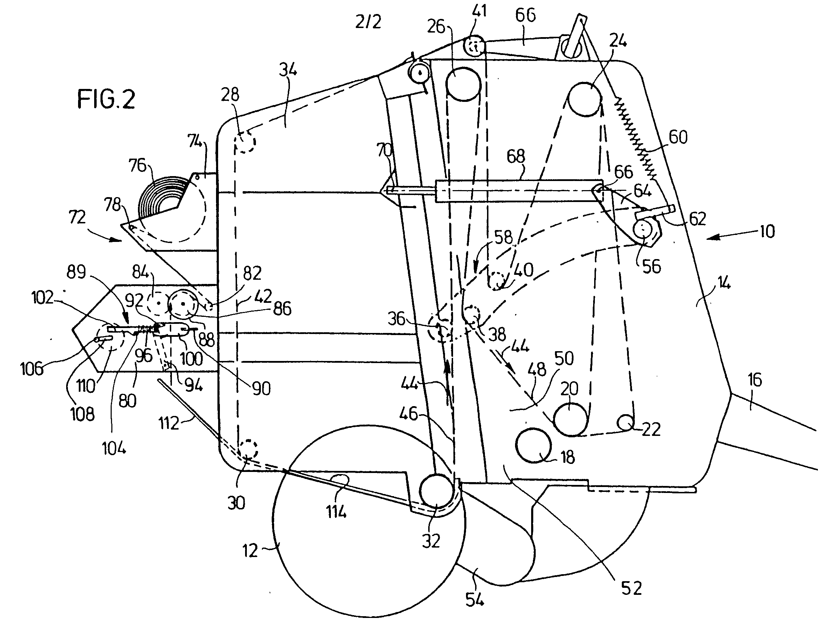

Six rubber belts 42 are trained side-by-side over the rolls, with the exception of the roll 18 which acts as a stripper roll, to provide the configuration shown and they move in the direction indicated by arrows 44, the stripper roll 18 being driven anti-clockwise as viewed in Fig. 2. However, alternate belts only are trained over the lower foremost roll 22, whilst the remaining belts bypass this roll, to provide a staggered array which is of no significance in relation to the present invention but which is described in our co-pending European Patent Application 82106409. Upwardly extending runs 46, 48 of the belts 42 define a bale-forming chamber 50 the ends of which are provided by the side walls 14 and gate 34 and which has an inlet 52 for crop received ·from a pick-up 54 beneath it.

In order to accommodate the increasing diameter of a growing bale core in the bale-forming chamber 50, the size of the chamber must also increase and a belt take-up and tensioning mechanism is provided at either side of the machine. These mechanisms include: a pair of rearwardly extending idler arms which are mounted rigidly at the forward end of the main frame 10 on a horizontal transverse shaft 56, providing a pivot connection for the arms, and of which the right hand arm 58 only is shown; the belt take-up roll 40 which is supported at either end at an intermediate location on the arms 58; and the pair of chamber restricting rolls 36, 38 supported at the free ends of the arms. The arms are biased in an anti-clockwise direction (in Fig. 2) by a pair of springs, one on either side of the main frame 10, of which only the right hand spring 60 is shown and only its arrangement will be described, the other being similar. The spring 60 is connected at its lower end by a post 62 to a lever portion 64 of the arm 58, the portion 64 being rigid with the pivot shaft 56, and at its upper end to one arm of a bell crank 66 the other arm of which bears one end of the take-up roll 41. The free end of the lever portion 64 is pivotally connected at a point 66 to the cylinder of a piston and cylinder unit 68, loading the arm 58, of which the piston is in turn pivotally connected to the gate 34 at a point 70, a similar arrangement being provided also on the left hand side of the machine.

As described thus far the baler is conventional.

On the back of the gate 34 and below it, there is mounted apparatus 72 for wrapping a completed bale with net which serves to maintain the form of the cylindrical bale. This apparatus 72 includes a trough-shaped holder 74 extending across the width of the gate 34 and containing a roll of net 76. An idler roll 78 is disposed along the outlet of the holder and the net trained over it. A pair of brackets 80 is arranged below the holder 74 and the brackets carry between them a further idler roll 82 and a pair of side-by-side feed rolls 84, 86 of which the roll 86 is driven by an electric or hydraulic motor 88. The net passes over the idler roll 82 and through the nip of the feed rolls 84, 86 by which it is gripped.

A cutting mechanism 89 is mounted on the brackets 80 below the feed rolls 84, 86 to receive the net therefrom and includes a horizontal knife 90 on the gate side of the net and a horizontal hammer 92 on the other side of the net pivotally mounted on the brackets 80 by upwardly extending posts 94. The hammer 92 is loaded at each end by a spring 96 bearing at one end against the hammer and at the other against an abutment 98 fixed to the inward face of the associated bracket 80. The ends of the hammer 92 are received in a slot 100 in each bracket 80 and are pivotally connected to a release lever 102 on the outward face of each bracket, the release lever having a shoulder on its underside in contact with an abutment pin 104. A lift pin 106 on a swing arm 108 of a motor 110 mounted on each bracket 80 is disposed so that it can move upwardly against the underside of the release lever 102 to raise it.

Below the brackets 80 there is a guide plate 112 which slopes forwardly and downwardly, and extends in close proximity to the underside of the belts in a run 114 between the rolls 30 and 32 finally terminating in an upturned end portion which follows the path of the belts to the inlet 52 of the baling chamber 50. The guide plate 112 is positioned to receive net which has passed through the cutting mechanism 88 and to press the net against the belt run 114 to advance it.

In operation, hay lying in a windrow is lifted and conveyed to the baling chamber 50 where the oppositely moving runs 46, 48 of the belts 42 cause the crop to turn clockwise (as viewed in Fig. 2) so as to form a bale core of increasing size which eventually overcomes the tension in the belts brought about by the belt take-up and tensioning mechanisms, and the idler arms 58 consequently swing upwardly and thus the chamber 50 increases in size until a full-sized bale has been formed. The operation of baling so far described is conventional.

The bale is then wrapped with net using the apparatus 72. With crop still being fed to the baling chamber 50 and the bale still rotating, the motor 88 is triggered, by means of a switch (not shown) which is sensitive to a predetermined position of the idler arms 58, to drive the feed roll 86. Thus if the motor 88 is hydraulic then it can be connected to its supply via an electro- valve (not shown) which in turn is connected to the switch so the valve is opened thereby at the predetermined position. Driving the feed roll 86 advances the net of which the end is, at this stage, level with the knife 90. The net is propelled to the guide plate 112, slides along the plate and reaches the bite between the roll 30 and belts 42 on the one hand and the plate 112 on the other where it is gripped and further advanced by the belt run 114. Finally the net reaches the upturned end portion of the plate 112 and thus enters the baling chamber 50 where it is carried round with the bale.

When three quarters of the circumference of the bale has been wrapped by the net the flow of hay to the baling chamber is stopped. This can be brought about, for example, by an electrically operated dog clutch (not shown) triggered automatically by a counter meter and connected in a drive line to the pick-up 12, only the pick-up being stopped.

By the completion of wrapping it is desirable to have two full turns of net on the bale so that there is entire overlap of the net. This can be achieved in various ways, and one method is as follows. Wrapping is continued after shut-off of the pick-up 12 until such time as the length of net downstream of the cutting mechanism 89 measures twice the circumference of the bale. This is metered by an electronic counter (not shown) which counts the number of turns of the feed rolls 84, 86 necessary to supply the desired length of net. The counter is connected to a switch for the motor 88 and emits a pulse after the requisite turns to operate the switch to stop the motor. The counter is also connected to a switch for the motor 110 of each cutting mechanism 89 and the motor 110 is switched on by the same signal which causes the motor 88 to stop. The motor 110 turns the swing arm 108 to bring the lift pin 106 into contact with the underside of the release lever 102 and raises the lever about its pivotal connection with the hammer 92 until the shoulder of the lever 102 clears the abutment pin 104, which instantaneously releases the action of the spring 96 impelling the hammer 92 toward the knife 90 and thereby cutting the net therebetween.

The bale continues to turn and the remainder of the cut net is drawn into the chamber 50 to wrap round the bale to complete the double wrap. The belts 42 are stopped, the gate 34 raised by the cylinder units 68, and the wrapped bale is deposited on the ground. The gate 34 is closed and baling can start once more.

Start-up can be brought about automatically, if desired, by an arrangement in which a pressure switch (not shown) sensitive to a predetermined pressure in the hydraulic supply for the gate 34 and for belt tension is triggered, when hydraulic pressure builds up again after closure of the gate, to start crop flow and the baling operation.

With a variable volume baling chamber machine as is the baler in the drawings, the size of the bale produced can of course be varied. This can be accommodated in the net wrapping arrangement simply by adjusting the counter to give its signal at the appropriate number of turns of the feed rolls 84, 86. This adjustment could be made automatically by arranging for it to be done in accordance with the desired position of the idler arms 58 which swing by an amount related to the size of bale.

## Claims

1. A baling machine for forming cylindrical bales of crop having a baling chamber (50) with an inlet (52) for crop material, a bale gate (34) formed by a rear portion of the macine, a holder (74) for a roll (76) of net or foil wrapping material, feed rolls (84, 86) for the wrapping material, a cutting mechanism (89) for the wrapping material downstream of the feed rolls (84, 86), and a wrapping material guide (112) disposed between the cutting mechanism (89) and the inlet (52) so that the wrapping material passes over the guide (112) into the chamber (50), characterised in that the baling chamber (50) is a variable volume chamber defined by belts (42), the holder (74) is disposed on the back of the gate (34), and the guide (112) is disposed so that the wrapping material passes between the guide (112) and the underside of the belts (42) through the inlet (52).

2. A baling machine according to claim 1 characterised in that the guide is sufficiently close to the underside of the belts (42) that wrapping material on it will be gripped between it and the belts and advanced by the belts to the inlet (52).

3. A baling machine according to claim 1 or 2 characterised in that the machine has idler arms (58) carrying a belt take-up roll (40) and being swingable to accommodate increasing bale size as a bale is being formed, a switch sensitive to the position of the arms (58) at a predetermined bale size, and a motor (88) for a said feed roll (86) which motor can be triggered to operate by the switch.

4. A baling machine according to claim 3 characterised in that the said motor (88) is a hydraulic motor, the motor is connected to a hydraulic supply via an electro-valve, and the switch is connected to the valve to open it at the predetermined bale size.

5. A baling machine according to any preceding claim characterised in that the cutting mechanism (89) comprises a knife (90), a spring loaded hammer (92) having a non-release and a release condition movable on release toward the knife (90) to cut wrapping material therebetween but holdable against such movement in its non-release condition, and a motor (110) drivable to release the hammer (92).

6. A baling machine according to claim 5 characterised in that the machine has a release lever (102) pivotally connected to the hammer (92), an abutment (104) for the lever (102) for holding it in a non-release position, and an arm (108) drivable by the motor (110) against the lever (102) to shift it away from its non-release position to release the hammer (92).

7. A baling machine according to claim 5 or 6 characterised in that a support bracket (80) is disposed on either side of the gate (34) with a guide slot (100) therein each slot receiving an outer end of the hammer (92), and a mounting post (94) for the hammer (92) pivotally connected to each bracket (80) and rigid with the hammer (92).

8. A baling machine according to any preceding claim characterised in that the machine has a counter arranged to meter the number of turns of the feed rolls (84, 86), a motor (88) for a said feed roll (86), and a switch which can trigger stopping of the motor, the switch being connected to the counter so as to receive therefrom a signal to trigger the switch to stop the motor (88) on the count of turns reaching a predetermined number.

9. A baling machine according to any of claims 5 to 7 and claim 8 characterised in that the machine has a switch which can trigger the motor (88) which is drivable to release the hammer (92), which switch is connected to the counter and which switch can be triggered by the said signal therefrom so as to trigger the motor to release the hammer (92).

10. A baling machine according to claim 3 or 4 and 8 or 9 characterised in that the counter is arranged so that the said predetermined number of turns is adjusted in accordance with the position of the idler arms (58) at the predetermined bale size.

## Patentansprüche

1. Ballenformmaschine zum Formen zylindrischer Ballen von Erntegut mit einer Ballenformkammer (50) mit einem Einlaß (52) für das Erntegutmaterial, einem Ballentor (34), das durch einen rückwärtigen Bereich der Maschine gebildet wird, einem Halter (74) für eine Rolle (76) eines netzoder folienförmigen Umhüllungsmaterials, mit Zuführungsrollen (84, 86) für das Umhüllungsmaterial, einem Schneidmechanismus (89) für das Umhüllungsmaterial, der stromabwärts von den Zuführungsrollen (84, 86) angeordnet ist, und mit einer Führung (112) für das Umhüllungsmaterial, die zwischen dem Schneidmechanismus (89) und dem Einlaß (52) angeordnet ist, so daß das Umhüllungsmaterial über die Führung (112) in die Kammer (50) läuft, dadurch gekennzeichnet, daß die Ballenformkammer (50) eine Kammer mit variablem Volumen ist und durch Riemen (42) definiert wird, daß der Halter (74) auf der Rückseite des Tores (34) angeordnet ist, und daß die Führung (112) so angeordnet ist, daß das Umhüllungsmaterial zwischen der Führung (112) und der Unterseite der Riemen (42) durch den Einlaß (52) läuft.

2. Ballenformmaschine nach Anspruch 1, dadurch gekennzeichnet, daß die Führung ausreichend nahe an der Unterseite der Riemen (42) angeordnet ist, so daß das Umhüllungsmaterial auf der Führung zwischen dieser und den Riemen erfaßt und durch die Riemen zu dem Einlaß (52) vorbewegt wird.

3. Ballenformmaschine nach Anspruch 1 oder 2, dadurch gekennzeichnet, daß die Maschine Spannrollenarme (58) aufweist, welche eine Riemenspannrolle (40) tragen und welche zur Anpassung an die Vergrößerung des Ballens während der Ausformung des Ballens verschwenkbar sind, daß ein Schalter vorgesehen ist, der auf die Stellung der Arme (58) bei einer vorbestimmten Ballengröße anspricht sowie ein Motor (88) für eine genannte Zuführungsrolle (86), welcher Motor zum Betrieb durch den Schalter ausgelöst werden kann.

4. Ballenformmaschine nach Anspruch 3, dadurch gekennzeichnet, daß der genannte Motor (88) ein hydraulischer Motor ist, der Motor mit einer hydraulischen Versorgung über ein Elektroventil verbunden ist und daß der Schalter mit dem Ventil verbunden ist, um dieses bei der vorbestimmten Ballengröße zu öffnen.

5. Ballenformmaschine nach irgendeinem der voranstahenden Ansprüche, dadurch gekennzeichnet, daß der Schneidmechanismus (89) ein Messer (90) umfaßt, einen unter Federvorspannung stehenden Hammer (92) mit einem Nichtfreigabezustand und einem Freigabezustand, der bei Freigabe in Richtung auf das Messer (90) bewegbar ist, um das Umhüllungsmaterialzwischen diesen zu durchtrennen, der jedoch gegen eine solche Bewegung in der Nichtfreigabestellung gehalten ist, und daß ein Motor (110) vorgesehen ist, der antreibbar ist, um den Hammer (92) freizugeben.

6. Ballenformmaschine nach Anspruch 5, dadurch gekennzeichnet, daß sie einen Freigabehebel (102) aufweist, der mit dem Hammer (92) gelenkig verbunden ist, daß sie ferner einen Anschlag (104) für den Hebel (102) aufweist, um diesen in einer Nichtfreigabestellung zu halten, sowie einen Arm (108), der durch den Motor (110) gegen den Hebel (102) antreiebbar ist, um diesen aus der Nichtfreigabestellung wegzubewegen und den Hammer (92) freizugeben.

7. Ballenformmaschine nach Anspruch 5 oder 6, dadurch gekennzeichnet, daß ein Stützhalter (80) auf jeder Seite des Tores (34) angeordnet und mit einem Führungsschlitz (100) versehen ist, wobei jeder Schlitz ein äußeres Ende des Hammers (92) aufnimmt, und daß ein Montagepfosten (94) für den Hammer (92) mit jedem Halter (80) gelenkig und mit dem Hammer (92) starr verbunden ist.

8. Ballenformmaschine nach irgendeinem der voranstehenden Ansprüche, dadurch gekennzeichnet, daß die Maschine einen Zähler aufweist, um die Zahl der Umdrehungen der Zuführungsrollen (84, 86) zu messen, einen Motor (88) für eine der genannten Zuführungsrollen (86) und einen Schalter, welcher das Stoppes den Motors auslösen kann, wobei der Schalter mit dem Zähler so verbunden ist, daß er von diesem ein Signal zum Auslösen des Schalters für einen Stop des Motors (88) erhält, wenn der Zählwert der Umdrehungen eine vorbestimmte Zahl erreicht.

9. Ballenformmaschine nach irgendeinem der Ansprüche 5 bis 7 und Anspruch 8, dadurch gekennzeichnet, daß die Maschine einen Schalter aufweist, welche den Motor (88) auslösen kann, der antreibbar ist, um den Hammer (92) freizugeben, welcher Schalter mit dem Zähler verbunden ist und welcher Schalter durch das genannte Signal von dem Zähler ausgelöst wird, um den Motor zur Freigabe des Hammers (92) auszulösen.

10. Ballenformmaschine nach Anspruch 3 oder 4 und 8 oder 9, dadurch gekennzeichnet, daß der Zähler so angeordnet ist, daß die vorbestimmte Anzahl von Umdrehungen in Übereinstimmung mit der Stellung der Spannrollenarme (58) bei der vorbestimmten Ballengröße einjustiert ist.

**Revendications**

1. Presse à balles pour former des balles cylindriques de matière récoltée, qui comprend une chambre de formation de balle (50) avec une entrée (52) de matière récoltée, une porte à balle (34) formée par une partie arrière de la machine, un magasin (74) pour une bobine (76) de filet ou de matière d'enveloppement en feuille, des rouleaux de distribution (84, 86) pour la matière d'enveloppement, un mécanisme de coupe (89) de la matière d'enveloppement situé en aval des rouleaux de distrbiution (84, 86), et un guidage de matière d'enveloppement (112) disposé entre le mécanisme de coupe (89) et l'entrée (52) de sorte que la matière d'enveloppement passe sur le guidage (112) pour pénétrer dans la chambre (50), caractérisée en ce que la chambre de formation de balle (50) est une chambre de volume variable définie par des courroies (42), le magasin (74) est disposé au dos de la porte (34), et le guidage (112) est disposé de sorte que la matière d'enveloppement passe entre le guidage (112) et la face inférieure des courroies (42), à travers l'entrée (52).

2. Presse à balles suivant la revendication 1, caractérisée en ce que le guidage est suffisamment proche de la face inférieure des courroies (42) pour que la matière d'emballage sur le guidage soit saisie entre celui-ci et les courroies et avancée par les courroies jusqu'à l'entrée (52).

3. Presse à balles suivant la revendication 1 ou 2, caractérisée en ce que la machine comprend des bras libres (58) portant un rouleau de reprise de courroie (40) et pouvant pivoter de manière à s'adapter à la dimension croissante d'une balle pendant la formation d'une balle, un contact sensible à la position des bras (58) pour une dimension de balle prédéterminée, et un moteur (88) pour undit rouleau de distribution (86), ce moteur pouvant être mis en service par ledit contact.

4. Presse à balles suivant la revendication 3, caractérisée en ce que ledit moteur (88) est un moteur hydraulique, le moteur est connecté à une alimentation hydraulique par l'intermédiaire d'une électrovanne et le contact est connecté à la vanne pour l'ouvrir à la position de balle prédéterminée.

5. Presse à balles suivant l'une quelconque des revendications précédentes, caractérisée en ce que le mécanisme de coupe (89) comprend une lame (90), un marteau chargé par ressort (92) ayant une position de non libération et une position de libération et mobile, lors de la libération, vers la lame (90) de manière à couper la matière d'enveloppement entre le marteau et la lame, mais étant retenu contre un tel mouvement dans sa position de non libération, et un moteur (110) pouvant être mis en service pour libérer le marteau (92).

6. Presse à balles suivant la revendication 5, caractérisée en ce que la machine comprend un levier de libération (102) relié de façon pivotante au marteau (92), une butée (104) pour le levier (102) afin de retenir celui-ci dans une position de non libération, et un bras (108) actionnable par le moteur (110) contre le levier (102) pour éloigner celui-ci de sa position de non libération, afin de libérer le marteau (92).

7. Presse à balles suivant la revendication 5 ou 6, caractérisée en ce qu'une console (80) est prévue de chaque côté de la porte (34) et une rainure de guidage (100) est ménagée dans chaque console, chaque rainure recevant une extrémité extérieure du marteau (92), et un montant de fixation (94) pour le marteau (92) est relié de façon pivotante à chaque console (80) et rigidement avec le marteau (92).

8. Presse à balles suivant l'une quelconque des revendications précédentes, caractériséee en ce que la machine comprend un compteur agencé pour compter le nombre de tours des rouleaux de distribution (84, 86), un moteur (88) pour un dit rouleau de distribution (86), et un contact qui peut déclencher l'arrêt du moteur, le contact étant relié au compteur de façon à en recevoir un signal de déclenchement du contact afin d'arrêter le moteur (88) lorsque le compte de tours atteint un nombre prédéterminé.

9. Presse à balles suivant l'une quelconque des revendications 5 à 7 et à la revendication 8, caractérisée en ce que la machine comprend un contact qui peut démarrer le moteur (110) qui fonctionne pour libérer le marteau (92), ce contact étant relié au compteur et ce contact pouvant être déclenché par ledit siganl du compteur de façon à démarrer le moteur pour libérer le marteau (92).

10. Presse à balles suivant la revendication 3 ou 4 et 8 ou 9, caractérisée en ce que le compteur est agencé de sorte que ledit nombre prédéterminé de tours est réglé en fonction de la position des bras libres (58) à la dimension de balle prédéterminée.

FIG. 1

EP 0 238 706 B1

FIG.2

2/2

EP 0 238 706 B1